# EUROPÄISCHE PATENTSCHRIFT

(11) **EP 1 452 272 B1**
(45) Veröffentlichungstag und Bekanntmachung des Hinweises auf die Patenterteilung: **29.03.2006**
(21) Anmeldenummer: 04000391.5
(22) Anmeldetag: 10.01.2004
(51) Int. Cl.: B24B 39/04, B24B 5/42

(54) **Verfahren zum Festwalzen von Übergängen zwischen den Lagerzapfen und Wangen von Kurbelwellen**
Method for deep rolling of transitions between the bearing journals and the flanges of crankshafts
Procédé de galetage de la zone de transition entre tourillon et flanc de vilebrequins

(30) Priorität: 26.02.2003 DE 10308124
(43) Veröffentlichungstag der Anmeldung: 01.09.2004
(73) Patentinhaber: Hegenscheidt-MFD GmbH & Co. KG, 41812 Erkelenz (DE)
(72) Erfinder: Heimann, Alfred, Dr.-Ing., 52078 Aachen (DE)
(74) Vertreter: Simons, Johannes

(56) Entgegenhaltungen:
- DE-A- 4 309 176
- US-B1- 6 393 885

## Beschreibung

Die Erfindung betrifft ein Verfahren zum Festwalzen von Radien oder Einstichen am Übergang zwischen den Lagerzapfen und der angrenzenden Wange einer Lagerstelle einer Kurbelwelle mit Hilfe von Festwalzrollen, die unter Drehung der Kurbelwelle mit einer Festwalzkraft bis zu einer vorgegebenen Einwalztiefe in den Radius oder den Einstich des Übergangs gedrückt werden.

Festwalzwerkzeuge zum Festwalzen von Einstichen an den Lagerzapfen von Kurbelwellen sind beispielsweise bekannt geworden aus der US 6,393,885 B1. Mit Hilfe des bekannten Festwalzens werden Druckeigenspannungen im Metall der Einstiche der Kurbelwelle erzeugt, welche sich beispielsweise bis zu einer Tiefe von 4 mm erstrecken können. Die tatsächliche Größe der Abrundungsradien von Festwalzrollen sollte bekanntermaßen in der Weise festgelegt werden, dass sie innerhalb der Fertigungstoleranzen für die Einstiche an der Kurbelwellen liegen. Gute Ergebnisse werden erzielt, wenn der Abrundungsradius der Festwalzrolle sich ungefähr an den Radius des Einschnitts anschmiegt. Die Festwalzkraft, die von den Festwalzrollen ausgeübt wird, kann während des Umlaufs der Kurbelwelle erhöht oder verringert werden um Muster von konzentrierten Druckeigenspannungen im Metall der Einstiche hervorzurufen, welche zu den am meisten beanspruchten Bereichen einer Kurbelwelle während des Betriebes gehören. Sowohl die Höhe der Festwalzkraft als auch die Anzahl der Überrollungen der Einstiche kann bekanntermaßen in einer Weise vorbestimmt werden, um eine optimale Dauerfestigkeit zu erreichen. Außerdem ist es von Vorteil, die tatsächliche Breite der Lagerzapfen von Kurbelwellen zu vergrößern. Um aber eine derartige Vergrößerung der effektiven Breite von Lagerzapfen zu erreichen, werden Festwalzrollen mit kleineren und zusammengesetzten Abrundungsradien vorgesehen, um die Einstiche festzuwalzen, welche ihrerseits ebenfalls mit geringeren Radien ausgeführt sind. Die aus der US-Patentschrift bekannte Lehre gipfelt schließlich darin, dass die Festwalzkraft von der Stützrolle zerlegt und auf seitliche Schulterflächen der Festwalzrollen übertragen wird. Die Komponenten der Festwalzkraft werden sodann durch die Festwalzrollen wieder zusammen gesetzt und von ihnen auf die Einstiche übertragen, wodurch die Einstiche der Lagerzapfen festgewalzt und verdichtet werden. Durch das Zerlegen der Festwalzkraft mit Hilfe der Stützrolle wird der Verschleiß der Festwalzrollen im Vergleich zu dem bis dahin bekannten Stande der Technik verringert.

Aus der DE 197 40 290 A1 ist ein Verfahren zum Festwalzen insbesondere von Kurbelwellen bekannt. Danach lassen sich nicht nur die Walzkräfte und entsprechend der Walzenverschleiß wesentlich verringern, sondern es kann zusätzlich auch eine Optimierung der Eigenspannungen in ihrer räumlichen Verteilung an der Kurbelwelle und hinsichtlich ihres Betrages erzielt werden. Darüber hinaus wird auch das Festwalzen von hochfesten Werkstoffen ermöglicht. Durch das bekannte Verfahren lässt sich also die Werkstoffbeanspruchung beim Festwalzen an beispielsweise den Übergangs- bzw. Freistichradien, die im Betrieb besonders stark belastet sind, so erhöhen, dass bei reduzierten Walzdrücken dennoch höhere Eigenspannungen erreicht werden. Dies wiederum ermöglicht eine Vergrößerung der Übergangs- bzw. Freistichradien und damit eine Verringerung der an diesen auftretenden Kerbwirkungen.

Aus der DE 100 60 219 A1 ist es darüber hinaus bekannt, die Güte einer festgewalzten Kurbelwelle mit Hilfe von mehreren Messtastern zu ermitteln, die jeweils einem der Hauptlager der Kurbelwelle zugeordnet sind. Entsprechend dem Messergebnis kann sich an eine erste eine weitere Festwalzoperation anschließen, bei welcher die Radien oder Einstiche einzelner Lagerstellen gezielt nachgewalzt werden. Das Nachwalzen kann sich über den gesamten Umfang der betreffenden Lagerstelle erstrecken, es kann aber auch nur einen Teil des Umfangs erfassen. Das Nachwalzen kann die Radien oder Einstiche an einzelnen Hauptlagern oder auch an Kurbelzapfen der Kurbelwelle erfassen.

Im Vergleich mit dem Stande der Technik wurde festgestellt, dass beim Festwalzen der Übergänge Druckeigenspannungen in den Radien oder Einstichen der Kurbelwellen entstehen, die ein Maximum unterhalb der festgewalzten Oberfläche in 0,6 bis 1,2 mm Tiefe haben. Bei der Betriebsbelastung der Kurbelwelle durch Umlaufbiegung tritt im Übergang die größte Spannung auf. Die Biegespannungen des Betriebs überlagern sich mit den Druckeigenspannungen des Festwalzens und die Fliessgrenze wird überschritten. Die Druckeigenspannung baut sich ab.

Auf der Oberfläche des festgewalzten Übergangs zeigen sich Anrisse, die sich bis in jene Tiefen erstrecken, wo die höchsten Druckeigenspannungen unterhalb der Oberfläche eingebracht wurden.

Daraus ergibt sich die Aufgabe für die Erfindung, die Dauerfestigkeit von Kurbelwellen durch das Festwalzen in der Weise zu erhöhen, dass durch den Betrieb der Kurbelwelle keine Anrisse auf der festgewalzten Oberfläche der Übergänge mehr auftreten.

Erfindungsgemäß wurde die Aufgabe dadurch gelöst, dass der Übergang zwischen dem Lagerzapfen und der angrenzenden Wange einer Lagerstelle einer Kurbelwelle festgewalzt wird, wobei der Übergang
- zunächst mit einer ersten Festwalzrolle, deren Radius zum Radius des Übergangs oder des Einstichs ein Schmiegungsverhältnis zwischen 1 und 0,85 hat und mit einer ersten Festwalzkraft festgewalzt wird, die im Übergang eine maximale Druckeigenspannung in einer Tiefe zwischen 1 und 2 mm unterhalb der festgewalzten Oberfläche hervorruft und
- sodann derselbe Übergang mit einer zweiten Festwalzrolle, die einen kleineren Radius als die erste Festwalzrolle hat und mit einer zweiten Festwalzkraft nachgewalzt wird, deren Größe so bemessen ist, dass die zweite Festwalzrolle gegenüber der mit der ersten Festwalzrolle erzielten eine weitergehende plastische Verformung auf der festgewalzten Oberfläche des Übergangs hervorruft.

Durch das zweite Walzen wird das Maximum der Druckeigenspannungen, welche beim einmaligen Überwalzen entstehen, näher an die Oberfläche gebracht. Es entsteht auf diese Weise ein neues Muster von Druckeigenspannungen, welches höher an der festgewalzten Oberfläche liegt und somit das Entstehen von Anrissen bereits an Ort und Stelle verhindert.

Das Nachwalzen der Oberflächen kann beispielsweise mit einem zweiten Festwalzwerkzeug in einer zweiten Festwalzoperation erfolgen. Durch geeignete Konstruktionen können aber auch Festwalzwerkzeuge geschaffen werden, welche Festwalzrollen mit unterschiedlichen Abrundungsradien in sich vereinen und nacheinander in Eingriff treten.

Vorteilhaft ist es, wenn die mit der ersten Festwalzrolle erzielte Einwalztiefe ungefähr 0,2 mm und die mit der zweiten Festwalzrolle darüber hinaus erzielte Einwalztiefe ungefähr 0,05 mm beträgt; in der Summe also eine gesamte Einwalztiefe von 0,25 mm erreicht wird.

Nachfolgend wird die Erfindung an einem Ausführungsbeispiel näher beschrieben.

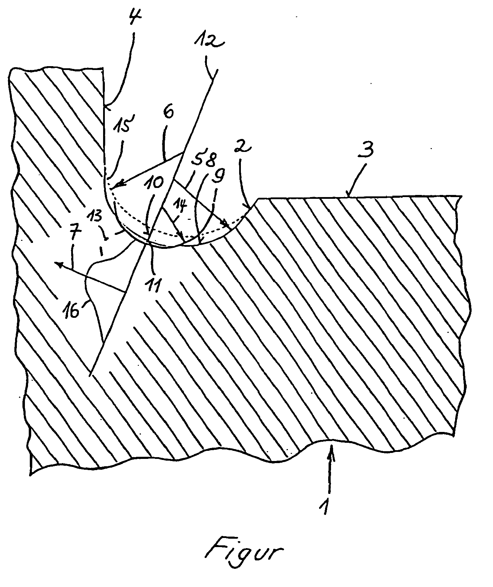

Die Figur zeigt einen vergrößerten Ausschnitt aus dem Übergang an der Lagerstelle einer Kurbelwelle.

Die Kurbelwelle 1 hat einen Lagerzapfen 3 und eine Wange 4, welche über einen Einstich 2 ineinander übergehen. Der Einstich 2 hat den Radius 6. Vor dem Festwalzen hat der Einstich 2 die durch die unterbrochene Linie 15 dargestellte Kontur.

Nach dem Festwalzen mit einer ersten Festwalzrolle (nicht gezeigt), welche den Radius 5 hat, entsteht die durch die Linie 8 dargestellte Oberfläche. Die Normale 12 zu der Oberfläche 8 erreicht beispielsweise eine erste Einwalztiefe 10. Der Einwalztiefe 10 entspricht eine Druckeigenspannung 16 innerhalb des Werkstoffs der Kurbelwelle 1, welche ihr Maximum 7 tief unterhalb der festgewalzten Oberfläche 8 hat, wie man das in der Figur erkennen kann.

Erfindungsgemäß wird die festgewalzte Oberfläche 8 mit einer zweiten Festwalzrolle (nicht gezeigt) nachgewalzt, welche einen Radius 14 hat. Dadurch entsteht im Einschnitt 2 eine weitergehende plastische Verformung, welche durch die Linie 9 angedeutet wird. Unterhalb der ersten Einwalztiefe 10 wird in Richtung der Normalen 12 noch eine zusätzliche Einwalztiefe 11 erreicht. Während die erste Einwalztiefe 10 ungefähr 0,2 mm beträgt, beträgt die zusätzliche Einwalztiefe 11 ungefähr 0,05 mm. Zugleich wird dabei im Material der Kurbelwelle am Übergang 2 eine oberflächennahe Druckeigenspannung 13 induziert, welche verhindert, dass beim Betrieb der Kurbelwelle 1 in Richtung der Normalen 12 Anrisse auf der Oberfläche 9 entstehen können. Auf diese Weise kann die Dauerfestigkeit der Kurbelwelle 1 wirksam erhöht werden.

### Bezugszeichenliste

- 1: Kurbelwelle
- 2: Einstich
- 3: Lagerzapfen
- 4: Wange
- 5: Einwalztiefe
- 6: Radius des Einstichs
- 7: Maximum der Druckeigenspannung
- 8: festgewalzte Oberfläche
- 9: weitergehende plastische Verformung
- 10: erste Einwalztiefe
- 11: zweite Einwalztiefe
- 12: Normale
- 13: oberflächennahe Druckeigenspannung
- 14: kleinerer Radius
- 15: Kontur
- 16: Druckeigenspannung

## Patentansprüche

1. Verfahren zum Festwalzen von Radien oder Einstichen am Übergang zwischen dem Lagerzapfen und der angrenzenden Wange einer Lagerstelle einer Kurbelwelle mit Hilfe von Festwalzrollen, die unter Drehung der Kurbelwelle mit einer Festwalzkraft bis zu einer vorgegebenen Einwalztiefe in den Radius oder den Einstich des Übergangs gedrückt werden,
**dadurch gekennzeichnet, dass** der Übergang
- zunächst mit einer ersten Festwalzrolle, deren Radius zum Radius des Übergangs oder des Einstichs ein Schmiegungsverhältnis zwischen 1 und 0,85 hat und mit einer ersten Festwalzkraft festgewalzt wird, die im Übergang eine maximale Druckeigenspannung in einer Tiefe zwischen 1 und 2 mm unterhalb der festgewalzten Oberfläche hervorruft und
- sodann derselbe Übergang mit einer zweiten Festwalzrolle, die einen kleineren Radius hat als die erste Festwalzrolle und mit einer zweiten Festwalzkraft nachgewalzt wird, deren Größe so bemessen ist, dass die zweite Festwalzrolle gegenüber der mit der ersten Festwalzrolle erzielten eine weitergehende plastische Verformung auf der festgewalzten Oberfläche des Übergangs hervorruft.

2. Verfahren nach Anspruch 1, **dadurch gekennzeichnet, dass** die mit der ersten Festwalzrolle zu erzielende Einwalztiefe ungefähr 0,2 mm und die mit der zweiten Festwalzrolle darüber hinaus zu erzielende Einwalztiefe ungefähr 0,05 mm beträgt.

## Claims

1. Method for deep rolling radii or fillets at the transition between the bearing journal and the adjacent flange of a bearing of a crankshaft by means of deep rolling rollers which are pressed with a deep rolling force to a predetermined rolling-in depth into the radius or fillet of the transition while the crankshaft is rotating, **characterised in that** the transition
- is first deep rolled with a first deep rolling roller, the radius of which has an osculation ratio between land 0.85 with respect to the radius of the transition or fillet, and with a first deep rolling force which induces in the transition a maximum residual compressive stress at a depth between 1 and 2 mm below the deep rolled surface, and
- the same transition is then re-rolled with a second deep rolling roller that has a smaller radius than the first deep rolling roller, and with a second deep rolling force the magnitude of which is such that the second deep rolling roller produces a more extensive plastic deformation on the deep rolled surface of the transition than that obtained with the first deep rolling roller.

2. Method according to claim 1, **characterised in that** the rolling-in depth to be attained with the first deep roller is approximately 0.2 mm and the further rolling-in depth to be obtained with the second deep rolling roller is approximately 0.05 mm.

## Revendications

1. Procédé de cylindrage de rayures ou d'entailles sur la zone de transition entre le tourillon et le flanc limitant d'un point d'appui d'un vilebrequin à l'aide de cylindres, qui sont pressés par rotation du vilebrequin avec une force de cylindrage jusqu'à une profondeur de cylindre prédéterminée dans les rayures ou entailles de la zone de transition, **caractérisé en ce que** la zone de transition
- est cylindrée d'abord avec un premier cylindre dont le rayon a un comportement d'osculation allant de 1 à 0,85 par rapport au rayon de la zone de transition ou de l'entaille et avec une première force de cylindrage, qui engendre dans la zone de transition, une tension maximale de pression d'une profondeur allant de 1 à 2 mm sous la surface cylindrée, et
- ensuite, la même zone de transition est cylindrée avec un deuxième cylindre, qui a un rayon plus petit que le premier cylindre et avec une deuxième force de cylindrage, dont l'ampleur est mesurée de sorte que le deuxième cylindre engendre une déformation largement plastique sur la surface cylindrée de la zone de transition, par rapport à celle atteinte avec le premier cylindre.

2. Procédé selon la revendication 1, **caractérisé en ce que** la profondeur de cylindrage à atteindre avec le premier cylindre s'élève à environ 0,2 mm et la profondeur de cylindrage à atteindre avec le deuxième cylindre à environ 0,05 mm.
